# EUROPÄISCHE PATENTANMELDUNG

(11) **EP 4 707 224 A1**
(43) Veröffentlichungstag der Anmeldung: **11.03.2026**
(21) Anmeldenummer: 25197878.9
(22) Anmeldetag: 25.08.2025
(51) Int. Cl.: B66F 9/075, B66F 9/22

(54) **VERFAHREN ZUR FAHRTRICHTUNGSÄNDERUNG EINES FAHRZEUGS SOWIE FAHRZEUG**

(30) Priorität: 30.08.2024 AT 5011124 U
(71) Anmelder: Palfinger AG, 5101 Bergheim bei Salzburg (AT)
(72) Erfinder: ROSENHAMMER, Christian, 5101 Bergheim bei Salzburg (AT); HASLAUER, Mario, 5101 Bergheim bei Salzburg (AT)
(74) Vertreter: Torggler & Hofmann Patentanwälte - Innsbruck

(57) **Zusammenfassung**

Verfahren zur Änderung der Fahrtrichtung eines Mitnahmestaplers durch einen sich im Mitnahmestaplers aufhaltenden Bediener, umfassend die folgenden Verfahrensschritte:
- Weiterleiten eines Befehls des Bedieners zur Fahrtrichtungsänderung an eine Steuereinheit (2),
- im Falle, dass die momentane Geschwindigkeit des Mitnahmestaplers einen vorbestimmten Wert überschreitet, Reduktion der Geschwindigkeit gemäß einem vorbestimmten Zusammenhang unter eine vorbestimmte Grenze durch die Steuereinheit (2) und anschließende Änderung der Fahrtrichtung durch die Steuereinheit (2), und vorzugsweise Beschleunigung auf eine vorbestimmte Geschwindigkeit gemäß einem vorbestimmten Zusammenhang, und
- im Falle, dass die momentane Geschwindigkeit des Mitnahmestaplers einen vorbestimmten Wert nicht überschreitet, sofortige Änderung der Fahrtrichtung durch die Steuereinheit (2), und vorzugsweise Beschleunigung auf eine vorbestimmte Geschwindigkeit gemäß einem vorbestimmten Zusammenhang.

## Beschreibung

Die Erfindung betrifft ein Verfahren zur Änderung der Fahrtrichtung eines Mitnahmestaplers mit wenigsten einem hydraulischen Getriebe gemäß dem Oberbegriff des Anspruchs 1.

Durch die hohe Kraftdichte sowie die gute Steuer- und Regelbarkeit sind hydraulische Antriebe aus der heutigen Industrie kaum mehr wegzudenken und finden Einzug in den unterschiedlichsten Branchen, angefangen von der Automobilindustrie, dem Schiffsbau, über das Baugewerbe und die Energieerzeugung bis hin zur Land- und Forstwirtschaft. Grundsätzlich unterscheidet man zwischen zwei Anwendungsbereichen: Industriehydraulik (oder auch Stationärhydraulik) und Mobilhydraulik. Letztere umfasst jegliche Anwendungen, bei denen ein hydraulisches Getriebe in mobilen Arbeitsmaschinen, im folgenden Arbeitsfahrzeuge genannt, installiert ist.

Bevorzugte Arbeitsfahrzeuge sind im Folgenden Stapler und Mitnahmestapler.

Arbeitsfahrzeuge mit hydraulischem Getriebe werden herkömmlicherweise mithilfe von zwei Pedalen gesteuert. Ein Pedal in Form eines Gaspedals ist direkt mit dem Motor des hydraulischen Getriebes verbunden und steuert dessen Drehzahl, wodurch wiederum direkt die mögliche Leistungsabgabe des hydraulischen Getriebes gesteuert wird. Das zweite Pedal in Form einer Wippe steuert die Fahrtrichtung, wobei bei der Fahrtrichtung jeweils zwischen zwei einander entgegengesetzten Fahrtrichtungen unterschieden wird. Dabei ist die Wippe über ein Ventil, meist in Form eines Proportionalventils, mit der hydraulischen Pumpe verbindbar. Das Ventil steuert den Volumenstrom im hydraulischen System und somit schlussendlich auch die Durchflussrichtung des Fluids im hydraulischen System.

Um einem Schaden am Getriebe durch den veränderlichen Volumenstrom vorzubeugen, ist zudem oft ein Druckbegrenzungsventil vorgesehen, welches überschüssiges Fluid zurück in den Tank leitet. Bei einem Fahrtrichtungswechsel wirkt das Druckbegrenzungsventil wie eine Bremsrampe, bis der Stillstand des hydraulischen Getriebes erreicht ist. Anschließend erfolgt der Antrieb in Gegenrichtung proportional zur Stellung der Wippe und der durch das Gaspedal vorgegebenen Drehzahl des Motors.

Die Wippe zur Änderung der Fahrtrichtung kann im Einzelfall auch in Form eines Hebels, Drehreglers, etc. verwirklicht sein. Das Funktionsprinzip bleibt jedoch dasselbe.

Die DE 11 2014 000 132 T5 offenbart ein Arbeitsfahrzeug mit einer hydraulischen Verstellpumpe und einem Hydraulikmotor, sowie ein Steuerungsverfahren für das Arbeitsfahrzeug. Das Arbeitsfahrzeug umfasst dabei unter anderem einen Vorwärts-Rückwärts-Hebelschalter und eine Steuervorrichtung, wobei die Steuervorrichtung, basierend auf den Eingangssignalen des Vorwärts-Rückwärts-Hebelschalters, Befehlssignale für ein elektromagnetisches Proportionalsteuerventil generiert.

Durch die soeben beschriebene Steuerung des hydraulischen Getriebes gemäß dem Stand der Technik ergeben sich jedoch einige Nachteile:
- Die Bedienung eines Arbeitsfahrzeugs mit hydraulischem Getriebe gestaltet sich als umständlich und bedarf einer hinreichenden Erfahrung des Bedieners.
- Der Vorgang des Fahrtrichtungswechsels dauert relativ lang, da das System zuerst zum Stillstand gebracht werden muss, bevor ein Antrieb in Gegenrichtung erfolgen kann.
- Der Fahrtrichtungswechsel erfordert das manuelle, koordinierte Zusammenspiel der Steuerung von Gaspedal und Wippe.
- Eine Wippe zur Änderung der Fahrtrichtung nimmt verhältnismäßig viel Platz im Innenraum des Arbeitsfahrzeugs ein.

Der Erfindung liegt die Aufgabe zugrunde ein Verfahren zum schnellen und sicheren Ändern einer Fahrtrichtung eines Mitnahmestaplers anzugeben und eine kompakte Bauweise einer Vorrichtung zur Umsetzung des Verfahrens zu ermöglichen.

Diese Aufgabe wird gelöst durch die Merkmale des Anspruchs 1 und ein System zur Umsetzung des Verfahrens gemäß dem Anspruchs 1, sowie einen Mitnahmestapler mit einem System zur Umsetzung eines Verfahrens nach Anspruch 1.

Ein solches Verfahren zur Änderung der Fahrtrichtung eines Mitnahmestaplers, umfasst zumindest die folgenden Verfahrensschritte:
- Weiterleiten eines Befehls des Bedieners zur Fahrtrichtungsänderung an eine Steuereinheit,
- im Falle, dass die momentane Geschwindigkeit des Mitnahmestaplers einen vorbestimmten Wert überschreitet, Reduktion der Geschwindigkeit gemäß einem vorbestimmten Zusammenhang unter eine vorbestimmte Grenze durch die Steuereinheit und anschließende Änderung der Fahrtrichtung durch die Steuereinheit, und vorzugsweise Beschleunigung auf eine vorbestimmte Geschwindigkeit gemäß einem vorbestimmten Zusammenhang, und
- im Falle, dass die momentane Geschwindigkeit des Mitnahmestaplers einen vorbestimmten Wert nicht überschreitet, Änderung der Fahrtrichtung durch die Steuereinheit, und vorzugsweise Beschleunigung auf eine vorbestimmte Geschwindigkeit gemäß einem vorbestimmten Zusammenhang.

Durch die Steuerung der Fahrtrichtungsänderung durch die Steuereinheit, wobei eine notwendige Abbremsung des Mitnahmestaplers durch die Steuereinheit gemäß einem vorbestimmten Zusammenhang erfolgt, kann der Vorgang des Fahrtrichtungswechsels schneller erfolgen als bei herkömmlichen Verfahren.

Des Weiteren wird die Sicherheit eines Bedieners durch das automatische Abbremsen durch die Steuereinheit erhöht, da dadurch abrupten Geschwindigkeits- und/oder Richtungsänderungen des Mitnahmestaplers vorgebeugt wird.

Da die Geschwindigkeitsreduktion und/oder -erhöhung durch die Steuereinheit geregelt wird, kann auf ein herkömmliches Bremspedal verzichtet werden. Dies erleichtert in weiterer Folge auch die Bedienbarkeit des Mitnahmestaplers.

Der vorbestimmte Zusammenhang zur Änderung der Geschwindigkeit des Mitnahmestaplers kann in Form einer Tabelle, einer Funktion, einer elektrischen Schaltung, einer mechanischen Schaltung etc. in der Steuereinheit hinterlegt sein.

Das Bedienelement benötigt zudem keine Neutralstellung, da diese bereits in der Steuereinheit hinterlegt ist, wobei unter einer Neutralstellung eine Stellung zwischen einer ersten und einer zweiten Stellung des Bedienelementes verstanden wird. D.h.: als konkrete Ausführungsform des Bedienelementes kommen beispielsweise ein Taster, ein Hebel, welcher in eine Stellung gedrückt werden kann und, vorzugsweise automatisch, in die Ausgangsstellung zurückbewegbar ist, ein Schalter mit zwei Stellungen oder Ähnliches in Frage.

Gemäß einer bevorzugten Ausführungsform ist ein Verfahren vorgesehen, wobei der Mitnahmestapler ein hydraulisches Getriebe aufweist, umfassend wenigstens ein hydraulisches System und eine Verstellpumpe, bevorzugt eine Axialkolbenpumpe, wobei die Verstellpumpe ein Stellelement zur Änderung eines Volumenstromes des hydraulischen Systems aufweist, wobei das Stellelement von einer ersten in eine zweite, der ersten Stellung entgegengesetzten Stellung übergeführt werden kann, umfassend wenigstens folgende Verfahrensschritte:
- Umwandlung eines mechanischen Impulses des Bedieners in wenigstens ein Steuersignal,
- Bestimmung der momentanen Stellung des Stellelements und des Volumenstromes des hydraulischen Systems (4),
- Im Falle, dass der Volumenstrom einen vorbestimmten Wert überschreitet, Reduktion des Volumenstromes durch Änderung des Stellelementes durch die Steuereinheit (2) und anschließend Überführung des Stellelementes in die der momentanen Stellung des Stellelementes entgegengesetzten Stellung,
- Im Falle, dass der Volumenstrom einen vorbestimmten Wert nicht überschreitet, sofortige Überführung des Stellelementes in die der momentanen Stellung des Stellelementes entgegengesetzte Stellung, und
- Erhöhung des Volumenstromes durch das von der Steuereinheit (2) gesteuerte Stellelement auf einen vorbestimmten Wert.

Die bevorzugten Ausführungsformen werden im Folgenden anhand des Beispiels eines Mitnahmestaplers mit einem hydraulischen Getriebe umfassend zumindest einer Verstellpumpe diskutiert. Unter einer Verstellpumpe wird grundsätzlich eine volumensändernde Pumpe verstanden, d.h. durch die Einstellung der Pumpe kann das Fördervolumen eines Fluids in einem hydraulischen System gesteuert und/oder geregelt werden. Als Verstellpumpe wird für die nachfolgende Beschreibung bevorzugter Ausführungsformen eine Axialkolbenpumpe angenommen. Diese Annahme ist nur beispielhaft und schränkt die Anwendbarkeit des Verfahrens nicht auf die Verwendung einer Axialkolbenpumpe ein.

Der Zustand einer Axialkolbenpumpe wird zumindest durch den Schwenkwinkel einer Drehscheibe zur Regulierung des möglichen Verdrängungsvolumens der Pumpe pro Umdrehung der Pumpe im hydraulischen System, sowie durch die Drehzahl eines Antriebs zur Regulierung der Durchflussgeschwindigkeit des Fluids im hydraulischen System beschrieben.

Abgesehen vom Betrag des Schwenkwinkels, kann bei dem Schwenkwinkel der hydraulischen Pumpe zwischen einer ersten Stellung, die einer Vorwärtsfahrtrichtung und einer zweiten Stellung, die einer Rückwärtsfahrtrichtung des Mitnahmestaplers entspricht, unterschieden werden.

Die Fahrtrichtung des Mitnahmestaplers, sowie dessen Geschwindigkeit wird durch die Einstellung des Schwenkwinkels, d.h. dessen Betrag und Stellung, sowie die Pumpendrehzahl bestimmt.

Betätigt der Bediener des Mitnahmestaplers das Bedienelement, vorzugsweise in Form eines Fußtasters, wird der so entstandene mechanische Impuls in ein Steuersignal umgewandelt. Das Steuersignal wird anschließend an eine Steuereinheit weitergeleitet. Die Steuereinheit erhält zudem bevorzugt Informationen über den momentanen Zustand des hydraulischen Getriebes. Der momentane Zustand des hydraulischen Getriebes wird wenigstens durch den momentanen Betrag des Schwenkwinkels und die momentane Stellung des Schwenkwinkels festgelegt.

Die Steuereinheit kann sowohl in Form einer elektrischen Vorrichtung als auch in Form einer mechanischen Vorrichtung verwirklicht werden. Dementsprechend kann das Steuersignal ein digitales oder ein analoges Signal sein.

Die Steuereinheit reduziert den momentanen Betrag des Schwenkwinkels auf einen vorbestimmten Wert des Schwenkwinkelbetrags, bevor der Schwenkwinkel ausgehend von der momentanen Stellung, in die der momentanen Stellung des Schwenkwinkels entgegengesetzte Stellung übergeführt wird. Dadurch werden mögliche Schäden am Getriebe verhindert, die bei einem sofortigen Stellungswechsel entstehen könnten und die Sicherheit für einen Bediener des Mitnahmestaplers erhöht, der durch eine zu steile Bremsrampe und/oder abrupten Fahrtrichtungswechsel verletzt werden könnte. Anschließend wird der Betrag des Schwenkwinkels wieder auf einen vorbestimmten Wert erhöht.

In einer bevorzugten Ausführungsform der Erfindung ist es vorgesehen, dass beim Start des Antriebs des Mitnahmestaplers, im Folgenden als Motor bezeichnet, eine Fahrtrichtung defaultmäßig eingenommen wird. Beim Start des Motors befindet sich das hydraulische Getriebe zuerst in einer Neutralstellung (N). Nach Betätigung des Fahrtrichtungstasters nimmt der Schwenkwinkel der hydraulischen Pumpe eine der beiden möglichen Stellungen, vorzugsweise die Stellung, welche einer Vorwärtsfahrtrichtung entspricht, ein.

Durch die Drehzahl des Motors lässt sich zudem die Durchflussgeschwindigkeit des Fluids im hydraulischen System steuern.

Es hat sich als besonders vorteilhaft herausgestellt bei einem Fahrtrichtungswechsel zuerst die Geschwindigkeit des Mitnahmestaplers auf einen von Null verschiedenen Wert zu reduzieren und anschließend die Fahrtrichtung zu initiieren.

Dies geschieht im Detail durch eine Reduktion des Betrags des Schwenkwinkels der hydraulischen Pumpe auf einen vorbestimmten, von Null verschiedenen Wert, sowie anschließendem Fahrtrichtungswechsel durch Überführen des Schwenkwinkels in die der momentanen Stellung entgegengesetzten Stellung. Dies ermöglicht einen schnelleren Fahrtrichtungswechsel im Vergleich zum Stand der Technik, wobei die Wahl des vorbestimmten Wertes für die Geschwindigkeit und/oder den Schwenkwinkelbetrag die Sicherheit für das Getriebe und den Bediener garantiert.

Gemäß einer bevorzugten Ausführungsform des Verfahrens erfolgt die Reduktion des Schwenkwinkelbetrags oder der Geschwindigkeit sofort und wartet dabei nicht den Momentanwert der Drehzahl des Motors ab. Dadurch wird wiederum eine schnelle Änderung der Fahrtrichtung ermöglicht.

Es kann gemäß einer bevorzugten Ausführungsform des Verfahrens vorgesehen sein, dass der vorbestimmte Wert für den Betrag des Schwenkwinkels wenigstens durch die momentane Drehzahl des Motors, sowie den momentanen Betrag des Schwenkwinkels vorgegeben wird. Der vorbestimmte Wert der Geschwindigkeit passt sich somit an den Ist-Zustand des Motors an.

Es hat sich als besonders vorteilhaft herausgestellt den Bremsvorgang, d.h. die Reduktion der Geschwindigkeit, derart zu gestalten, dass der Bremsvorgang dem Verlauf einer kontinuierlichen, glatten Funktion, bevorzugt einer linearen Funktion, folgt. Dies gilt in gleicher Weise für den Beschleunigungsvorgang.

Alternativ oder ergänzend kann es vorgesehen sein, dass nach einem erfolgten mechanischen Impuls von Seiten des Bedieners innerhalb eines festgelegten Zeitfensters kein weiterer mechanischen Impuls in ein Steuersignal umgewandelt wird oder es auf Basis des weiteren Steuersignals zu keiner Änderung des Schwenkwinkels kommt. Diese Vorkehrung trägt zur Sicherheit des Bedieners, sowie der Vermeidung von Schäden am hydraulischen Getriebe bei.

In einer alternativen Ausführungsform des Verfahrens kann ein Kommando durch eine zuvor festgelegte Abfolge von mechanischen Impulsen, bevorzugt gekennzeichnet durch die Bediendauer und/oder die Betätigungsfrequenz, festgelegt werden. Unter Kommando wird hierbei ein vorbestimmtes Steuersignal verstanden. Das Kommando kann dabei die Einstellung des Schwenkwinkels, die Wahl der Brems- und/oder Beschleunigungsrampe oder Ähnliches vorgeben.

Gemäß einer bevorzugten Ausführungsform des Verfahrens ist eine Kombination einer Hydraulikpumpe mit einem Elektromotor vorgesehen, welche im Folgenden als E-Drive bezeichnet wird.

In einer bevorzugten Ausführungsform des E-Drives ist es vorgesehen, dass auch das Gaspedal mit der Steuereinheit verbunden ist.

In einer alternativen Ausführungsform des Verfahrens kann es vorgesehen sein, dass nach dem Start des Motors des Mitnahmestaplers das hydraulische Getriebe durch Betätigung des Gaspedals automatisch von der Neutralstellung (N) in die Vorwärtsfahrtrichtung oder Rückwärtsfahrtrichtung überführt wird.

Alternativ oder ergänzend kann es vorgesehen sein, dass die Steuereinheit zusätzlich eine Hebevorrichtung und/oder andere Vorrichtung des Mitnahmestaplers steuert und/oder regelt.

In einer bevorzugten Ausführungsform stehen einem Bediener des Mitnahmestaplers neben den zwei Fahrtrichtungen, vorwärts und rückwärts, zwei weitere Fahrtrichtungen, links und rechts, zur Verfügung. Die Räder des Mitnahmestaplers lassen sich dabei mittels eines Bedienhebels um 90° umstellen und der Bediener kann so zwischen den beiden Fahrmodi (Vorwärts-Rückwärts und Links-Rechts) wechseln. Ein Mitnahmestapler mit zwei Fahrmodi anstelle von einem Fahrmodus wird auch 4-Wege-Mitnahmestapler genannt.

Die zuvor angeführten besonderen Ausführungsformen eines Mitnahmestaplers mit einem einzigen Fahrmodus lassen sich eins zu eins auf einen Mitnahmestapler mit 4-Wege-System, d.h. mit zwei Fahrmodi, anwenden. Das Schwenken der Reifen des Mitnahmestaplers um 90° hat zur Folge, dass der Mitnahmestapler in einen anderen Fahrmodus wechselt und der Fahrtrichtungstaster nunmehr den Wechsel zwischen den Fahrtrichtungen des Fahrmodus steuert, der vom Bediener durch den Bedienhebel ausgewählt wurde.

Auf analoge Weise können auch noch weitere Fahrmodi hinzugefügt werden und die Fahrtrichtung auch dieser weiteren Fahrmodi mittels des Fahrtrichtungstasters gewechselt werden.

Weitere bevorzugte Ausführungsformen des Verfahrens sind in den weiteren abhängigen Ansprüchen definiert.

Schutz wird auch begehrt für ein System zur Umsetzung eines Verfahrens gemäß Anspruch 1, wobei das System zumindest umfasst:
- ein Bedienelement, welches dazu konfiguriert ist wenigstens einen Befehl eines Bedieners in ein Steuersignal umzuwandeln,
- eine Steuereinheit, welche dazu konfiguriert ist,
   - im Falle, dass die momentane Geschwindigkeit des Mitnahmestaplers einen vorbestimmten Wert überschreitet, die Reduktion der Geschwindigkeit gemäß einem vorbestimmten Zusammenhang unter eine vorbestimmte Grenze zu steuern und anschließend die Änderung der Fahrtrichtung zu steuern, und vorzugsweise die Beschleunigung des Mitnahmestaplers auf eine vorbestimmte Geschwindigkeit gemäß einem vorbestimmten Zusammenhang zu steuern, und
   - im Falle, dass die momentane Geschwindigkeit des Mitnahmestaplers einen vorbestimmten Wert nicht überschreitet, die sofortige Änderung der Fahrtrichtung zu steuern, und vorzugsweise die Beschleunigung des Mitnahmestaplers auf eine vorbestimmte Geschwindigkeit gemäß einem vorbestimmten Zusammenhang zu steuern;
- ein hydraulisches System zur Änderung einer Fahrtrichtung des Mitnahmestaplers, welches dazu konfiguriert ist,
   - im Falle, dass die momentane Geschwindigkeit des Mitnahmestaplers einen vorbestimmten Wert überschreitet, die Geschwindigkeit gemäß einem vorbestimmten Zusammenhang unter eine vorbestimmte Grenze zu reduzieren und anschließend die Fahrtrichtung zu ändern, und vorzugsweise den Mitnahmestapler auf eine vorbestimmte Geschwindigkeit gemäß einem vorbestimmten Zusammenhang zu beschleunigen, und
   - im Falle, dass die momentane Geschwindigkeit des Mitnahmestaplers einen vorbestimmten Wert nicht überschreitet, die Fahrtrichtung sofort zu ändern, und vorzugsweise den Mitnahmestapler auf eine vorbestimmte Geschwindigkeit gemäß einem vorbestimmten Zusammenhang zu beschleunigen;
- ein Antrieb, bevorzugt in Form eines Elektromotors, welcher dazu konfiguriert ist, das hydraulische System anzutreiben.

Schutz wird zudem begehrt für einen Mitnahmestapler mit einem System zur Umsetzung des Verfahrens gemäß Anspruch 1.

Weitere Einzelheiten und Vorteile bevorzugter Ausführungsformen der Erfindung werden anhand der Figurenbeschreibung unter Bezugnahme auf die Zeichnungen im Folgenden näher erläutert. Darin zeigen:
Fig. 1 ein Blockdiagramm des Systems gemäß Anspruch 10
Fig. 2 eine Schaltskizze des hydraulischen Systems zur Festlegung einer Fahrtrichtung
Fig. 3 ein Blockdiagramm des Verfahrens gemäß Anspruch 1

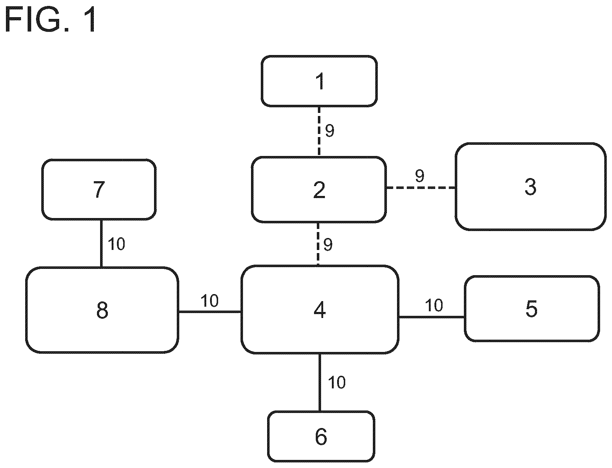

In der Figur 1 ist der schematische Aufbau eines Systems zur Umsetzung des Verfahrens zur Änderung der Fahrtrichtung eines Mitnahmestaplers gemäß dem Anspruch 1 dargestellt.

Darin kennzeichnen die gestrichelten Linien die Leitungen 9 zwischen dem Bedienelement 1, der Steuereinheit 2 und der Vorrichtung 3 zur Bestimmung des Ist-Zustandes des Antriebs 5. Eine mögliche Verbindung zwischen der Vorrichtung 3 und dem Antrieb 5 ist zur besseren Übersicht nicht explizit dargestellt. Die Leitungen 9 können dabei je nach Ausführungsform der Steuereinheit entweder elektrisch, hydraulisch, drahtlos, etc. ausgebildet sein.

Das Bedienelement 1 ist bevorzugt in der Form eines Fußtasters im Fußbereich der Fahrerkabine des Mitnahmestaplers angebracht. Der mechanische Impuls des Bedieners wird durch das Bedienelement in ein Steuersignal umgewandelt. Das Steuersignal wird anschließend über die Leitungen 9 an die Steuereinheit 2 weitergeleitet.

Innerhalb der Steuereinheit 2 ist jeweils wenigstens ein vorbestimmter Zusammenhang zur Reduktion der Geschwindigkeit (auch Bremsrampe genannt) und zur Erhöhung der Geschwindigkeit (auch Beschleunigungsrampe genannt) hinterlegt.

Zudem ist zusätzlich jeweils ein vorbestimmter Wert für die maximale und minimale Geschwindigkeit vor einem Fahrtrichtungswechsel hinterlegt oder die Werte für die maximale und minimale Geschwindigkeit werden in Abhängigkeit des Ist-Zustandes des Motors vor jedem Fahrtrichtungswechsel durch die Steuereinheit 2 festgelegt.

Als maximale Geschwindigkeit ist dabei der maximale Wert der Geschwindigkeit zu verstehen, bei welchem ein für den Bediener und das hydraulische System sicherer Fahrtrichtungswechsel vollzogen werden kann.

Die minimale Geschwindigkeit gibt den Wert für die Geschwindigkeit an, auf den der Mitnahmestapler abgebremst werden soll, bevor ein sicherer Fahrtrichtungswechsel vollzogen werden kann.

Bevorzugt stimmt der Wert für die maximale Geschwindigkeit mit dem Wert für die minimale Geschwindigkeit überein und wird besonders bevorzugt als ein einziger Wert in der Steuereinheit hinterlegt.

Die Informationen über den Ist-Zustand des Antriebs werden von einer Vorrichtung 3 erhoben und an die Steuereinheit 2 weitergeleitet. Die Vorrichtung 3 kann dabei in Form einer externen Recheneinheit, wenigstens eines Sensors oder Ähnlichem verwirklicht sein.

Durch die Steuereinheit 2 wird das hydraulische System 4 zur Festlegung der Fahrtrichtung des Mitnahmestaplers gesteuert.

Das hydraulische System 4 zur Festlegung der Fahrtrichtung ist dabei über hydraulische Leitungen 10 wenigstens mit dem Antrieb 5, dem Tank 6 des hydraulischen Getriebes und über das hydraulische System 8 zur Festlegung des Fahrmodus mit wenigstens einem Aktuator 7 verbunden. Der Aktuator 7 ist bevorzugt als Radantrieb ausgeführt.

Mittels des hydraulischen Systems 8 wird der Fahrmodus des Mitnahmestaplers festgelegt. Pro Fahrmodus wird dabei zwischen zwei einander entgegengesetzten Fahrtrichtungen, bevorzugt Vorwärts und Rückwärts oder Links und Rechts, unterschieden.

Das hydraulische System 8 steuert entsprechend des gewählten Fahrmodus die Stellung der wenigstens einen Fortbewegungsvorrichtung, bevorzugt wenigstens eines Rades, des Mitnahmestaplers.

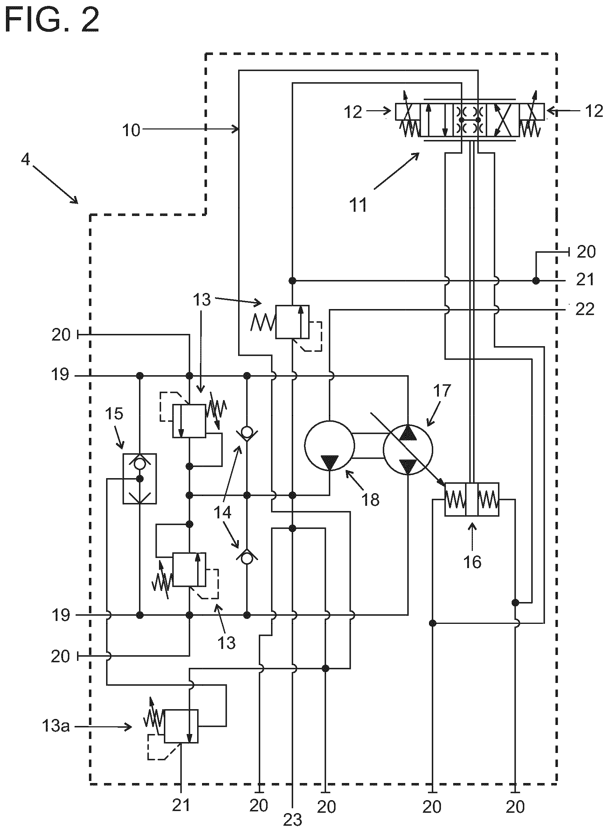

Die Figur 2 zeigt eine Schaltskizze des hydraulischen Systems 4 zur Festlegung der Fahrtrichtung. Die einzelnen Komponenten sind dabei über hydraulische Leitungen 10 miteinander verbunden. Die Figur 2 zeigt lediglich eine vereinfachte Schaltskizze des hydraulischen Systems und schließt das Vorhandensein weiterer hydraulischer Komponenten, beispielsweise Filter, Ventile, etc., wobei die weiteren Komponenten zwischen den in Figur 2 dargestellten Komponenten anbringbar sind, nicht aus.

Die Steuereinheit 2 ist über Anschlüsse 12 mit einem Proportionalventil 11 verbunden. Die Fahrtrichtung kann durch die Steuereinheit 2 direkt über die Stellung des Proportionalventils gesteuert werden.

Das Proportionalventil 11 ist über eine Verstelleinheit 16 mit der Verstellpumpe 17 verbunden, wodurch zumindest der Volumenstrom der Verstellpumpe 17 entsprechend der Stellung des Proportionalventils 11 gesteuert wird.

Die Verstellpumpe 17 wird über die hydraulische Pumpe 18 mit Hydraulikfluid aus dem Tank 6 versorgt. Dazu wird das Fluid über die wenigstens eine Saugleitung 22 zur hydraulischen Pumpe 18 befördert und über die wenigstens eine Rücklaufleitung 21 wieder dem Tank 6 zugeführt.

Der Volumenstrom zum Antrieb 5 des hydraulischen Getriebes wird durch Druckbegrenzungsventile 13 gedrosselt. Dadurch wird die Versorgung des hydraulischen Systems mit einem gleichmäßigen Druck durch die hydraulische Pumpe 18 sichergestellt.

Das Wechselventil 15 ist als eine Art Sicherungsventil vorgesehen. Im Fall eines Überdrucks im hydraulischen System des Fahrantriebs öffnet sich das Wechselventil 15 und überschüssiges Hydraulikfluid wird über ein Druckbegrenzungsventil 13a zum Tank 6 abgeleitet. Dadurch kann ein Schaden am hydraulischen System abgewendet werden.

Die wenigstens zwei Rückschlagventile 14 ermöglichen ein leckfreies, schnelles und sicheres Koppeln der wenigstens zwei Hydraulikleitungen, die über die Anschlüssen 19 das hydraulische System 4 zur Festlegung der Fahrtrichtung mit dem hydraulischen System 8 zur Festlegung des Fahrmodus verbinden.

Zusätzlich kann ein Load-Sensing-System (LS-System) vorgesehen sein, welches in Figur 2 nicht explizit dargestellt wird. Das LS-System stellt sicher, dass die hydraulische Pumpe 18 nur den Volumenstrom fördert, der für alle aktiven Aktuatoren 7 momentan benötigt wird. Für die Rückmeldung über die LS-Leitung wird wenigstens ein Wechselventil zwischen den Aktuatoren 7 angebracht, wobei das wenigstens eine Wechselventil immer den maximalen im hydraulischen System auftretenden Druck weitergibt.

Über die wenigstens eine Steuerleitung 23 können Schaltelemente des hydraulischen Getriebes des Mitnahmestaplers betätigt werden. Beispielsweise ermöglicht die Steuerleitung 23 das Weiterleiten von Hydraulikfluid zum Öffnen der Bremse des Mitnahmestaplers.

Die Anschlüsse 20 sind blindgeschlossen und können optional als Messanschlüsse für etwaige Wartungsarbeiten am hydraulischen System genutzt werden. Im Falle einer Wartung wird wenigstens ein externes Messgerät über wenigstens einen Anschluss 20 mit dem hydraulischen System verbunden. Dadurch kann abhängig von dem verwendeten Messanschluss 20 wenigstens eine Komponente des hydraulischen Systems auf dessen korrekte Funktion hin überprüft werden.

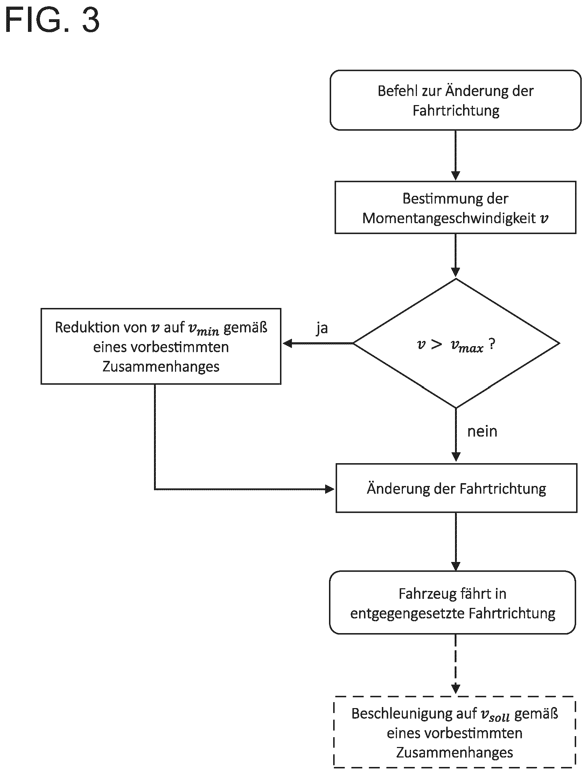

In der Figur 3 wird mittels eines Blockdiagramms der Ablauf des Verfahrens gemäß Anspruch 1 dargestellt. Die durchgängigen Linien kennzeichnen dabei essenzielle Verfahrensschritte, währenddessen die gestrichelten Linien bevorzugte Verfahrensschritte kennzeichnen.

Am Anfang des Verfahrens steht der Befehl zur Änderung der Fahrtrichtung durch die Betätigung des Bedienelementes 1 durch den Bediener. Anschließend wird die Momentangeschwindigkeit v des Mitnahmestaplers bestimmt. Die Momentangeschwindigkeit wird sodann mit einem vorbestimmten, in der Steuereinheit 2 hinterlegten Wert für die maximale Geschwindigkeit *vₘₐₓ* verglichen. Im Falle, dass die Momentangeschwindigkeit v die maximale Geschwindigkeit *vₘₐₓ* überschreitet, erfolgt die Reduktion der Geschwindigkeit v auf einen vorbestimmten, in der Steuereinheit 2 hinterlegten Wert für die minimale Geschwindigkeit *vₘᵢₙ* gemäß einem vorbestimmten, in der Steuereinheit 2 hinterlegten Zusammenhang (Bremsrampe). Anschließend wird die Fahrtrichtung des Mitnahmestaplers durch die Steuereinheit 2 geändert. Im Falle, dass die Momentangeschwindigkeit v des Mitnahmestaplers einen maximalen Geschwindigkeitswert nicht überschreitet, wird die Fahrtrichtung sofort geändert. Nach der Änderung der Fahrtrichtung befindet sich das System in einem Zustand, der dem Antrieb des Mitnahmestaplers in eine der Ausgangsfahrtrichtung entgegengesetzte Fahrtrichtung ermöglicht. Bevorzugt wird anschließend die Geschwindigkeit auf einen Sollwert *vₛₒₗₗ* gemäß einem vorbestimmten, in der Steuereinheit 2 hinterlegten Zusammenhang (Beschleunigungsrampe) erhöht.

### Bezugszeichenliste:

- 1: Bedienelement
- 2: Steuereinheit
- 3: Vorrichtung zur Bestimmung des Ist-Zustandes des Antriebs
- 4: Hydraulisches System zur Festlegung der Fahrtrichtung
- 5: Antrieb
- 6: Tank
- 7: Aktuator
- 8: Hydraulisches System zur Festlegung des Fahrmodus
- 9: Leitungen
- 10: Hydraulische Leitungen
- 11: Proportionalventil
- 12: Anschlüsse für die Steuereinheit
- 13: Druckbegrenzungsventil
- 13a: Druckbegrenzungsventil zum Ableiten von Hydraulikfluid bei einem Überdruck im hydraulischen System
- 14: Rückschlagventil
- 15: Wechselventil
- 16: Verstelleinheit
- 17: Verstellpumpe
- 18: Hydraulische Pumpe
- 19: Anschluss für das hydraulische System zur Festlegung des Fahrmodus
- 20: Blindgeschlossener Anschluss (optional Messanschluss)
- 21: Tankanschluss, Rücklaufleitung
- 22: Tankanschluss, Saugleitung
- 23: Steuerleitung zur Betätigung von Schaltelementen

## Patentansprüche

1. Verfahren zur Änderung der Fahrtrichtung eines Mitnahmestaplers durch einen sich im Mitnahmestaplers aufhaltenden Bediener, **gekennzeichnet durch** die folgenden Verfahrensschritte:
- Weiterleiten eines Befehls des Bedieners zur Fahrtrichtungsänderung an eine Steuereinheit (2),
- im Falle, dass die momentane Geschwindigkeit des Mitnahmestaplers einen vorbestimmten Wert überschreitet, Reduktion der Geschwindigkeit gemäß einem vorbestimmten Zusammenhang unter eine vorbestimmte Grenze durch die Steuereinheit (2) und anschließende Änderung der Fahrtrichtung durch die Steuereinheit (2), und vorzugsweise Beschleunigung auf eine vorbestimmte Geschwindigkeit gemäß einem vorbestimmten Zusammenhang, und
- im Falle, dass die momentane Geschwindigkeit des Mitnahmestaplers einen vorbestimmten Wert nicht überschreitet, sofortige Änderung der Fahrtrichtung durch die Steuereinheit (2), und vorzugsweise Beschleunigung auf eine vorbestimmte Geschwindigkeit gemäß einem vorbestimmten Zusammenhang.

2. Verfahren nach dem vorangehenden Anspruch, wobei der Mitnahmestapler ein hydraulisches Getriebe aufweist, umfassend wenigstens ein hydraulisches System (4) und eine Verstellpumpe (17), bevorzugt eine Axialkolbenpumpe, wobei die Verstellpumpe (17) ein Stellelement zur Änderung eines Volumenstromes des hydraulischen Systems (4) aufweist, wobei das Stellelement von einer ersten in eine zweite, der ersten Stellung entgegengesetzten Stellung übergeführt werden kann, umfassend wenigstens folgende Verfahrensschritte:
- Umwandlung eines mechanischen Impulses des Bedieners in wenigstens ein Steuersignal,
- Bestimmung der momentanen Stellung des Stellelements und des Volumenstromes des hydraulischen Systems (4),
- Im Falle, dass der Volumenstrom einen vorbestimmten Wert überschreitet, Reduktion des Volumenstromes durch Änderung des Stellelementes durch die Steuereinheit (2) und anschließend Überführung des Stellelementes in die der momentanen Stellung des Stellelementes entgegengesetzten Stellung,
- Im Falle, dass der Volumenstrom einen vorbestimmten Wert nicht überschreitet, sofortige Überführung des Stellelementes in die der momentanen Stellung des Stellelementes entgegengesetzte Stellung, und
- Erhöhung des Volumenstromes durch das von der Steuereinheit (2) gesteuerte Stellelement auf einen vorbestimmten Wert.

3. Verfahren nach Anspruch 2, wobei eine Stellung des Stellelementes zwischen der ersten und der zweiten Stellung einer Neutralstellung entspricht und wobei beim Start des hydraulischen Getriebes, und vorzugsweise Betätigen des Bedienelementes (1), die erste Stellung oder die zweite Stellung des Stellelementes defaultmäßig eingenommen wird, bevorzugt die Stellung, die einer Vorwärtsfahrtrichtung des Mitnahmestaplers entspricht.

4. Verfahren nach einem der Ansprüche 2 bis 3, wobei ein Zustand des hydraulischen Getriebes wenigstens durch eine Drehzahl der Verstellpumpe (17) und/oder eines Antriebes (5) festgelegt wird und die Drehzahl durch eine Geschwindigkeitsvorgabe des Bedieners mitbestimmt wird.

5. Verfahren nach dem Anspruch 4, wobei die Reduktion des Volumenstromes unabhängig von der momentanen Drehzahl erfolgt.

6. Verfahren nach einem der vorangehenden Ansprüche, wobei es nach dem Weiterleiten des Befehls eines Bedieners an die Steuereinheit (2) innerhalb eines vorbestimmten Zeitintervalls zu keiner Weiterleitung eines weiteren Befehles des Bedieners an die Steuereinheit (2) kommt.

7. Verfahren nach einem der vorangehenden Ansprüche, wobei die Reduktion der Geschwindigkeit und/oder des Volumenstromes gemäß dem Verlauf einer kontinuierlichen, glatten Funktion, bevorzugt einer linearen Funktion, erfolgt.

8. Verfahren nach einem der vorangehenden Ansprüche, wobei die Erhöhung der Geschwindigkeit und/oder des Volumenstromes gemäß dem Verlauf einer kontinuierlichen, glatten Funktion, bevorzugt einer linearen Funktion, erfolgt.

9. Verfahren nach einem der vorangehenden Ansprüche, wobei eine vorbestimmte Abfolge von Befehlen des Bedieners, bevorzugt in Abhängigkeit der Bediendauer und/oder einer Betätigungsfrequenz, einer vorbestimmten Einstellung des Mitnahmestaplers und/oder des hydraulischen Getriebes entspricht.

10. System zur Änderung der Fahrtrichtung eines Mitnahmestaplers umfassend wenigstens:
- ein Bedienelement (1), vorzugsweise ein Fußtaster, welches dazu konfiguriert ist wenigstens einen Befehl eines Bedieners in ein Steuersignal umzuwandeln,
- eine Steuereinheit (2), welche dazu konfiguriert ist,
• im Falle, dass die momentane Geschwindigkeit des Mitnahmestaplers einen vorbestimmten Wert überschreitet, die Reduktion der Geschwindigkeit gemäß einem vorbestimmten Zusammenhang unter eine vorbestimmte Grenze zu steuern und anschließend die Änderung der Fahrtrichtung zu steuern, und vorzugsweise die Beschleunigung des Mitnahmestaplers auf eine vorbestimmte Geschwindigkeit gemäß einem vorbestimmten Zusammenhang zu steuern, und
• im Falle, dass die momentane Geschwindigkeit des Mitnahmestaplers einen vorbestimmten Wert nicht überschreitet, die sofortige Änderung der Fahrtrichtung zu steuern, und vorzugsweise die Beschleunigung des Mitnahmestaplers auf eine vorbestimmte Geschwindigkeit gemäß einem vorbestimmten Zusammenhang zu steuern;
- ein hydraulisches System zur Änderung einer Fahrtrichtung (4) des Mitnahmestaplers, welches dazu konfiguriert ist,
• im Falle, dass die momentane Geschwindigkeit des Mitnahmestaplers einen vorbestimmten Wert überschreitet, die Geschwindigkeit gemäß einem vorbestimmten Zusammenhang unter eine vorbestimmte Grenze zu reduzieren und anschließend die Fahrtrichtung zu ändern, und vorzugsweise den Mitnahmestapler auf eine vorbestimmte Geschwindigkeit gemäß einem vorbestimmten Zusammenhang zu beschleunigen, und
• im Falle, dass die momentane Geschwindigkeit des Mitnahmestaplers einen vorbestimmten Wert nicht überschreitet, die Fahrtrichtung sofort zu ändern, und vorzugsweise den Mitnahmestapler auf eine vorbestimmte Geschwindigkeit gemäß einem vorbestimmten Zusammenhang zu beschleunigen;
- einen Antrieb (5), bevorzugt in Form eines Elektromotors, welcher dazu konfiguriert ist, das hydraulische System (4) anzutreiben.

11. System nach dem vorangehenden Anspruch, wobei zusätzlich ein Bedienelement (1), bevorzugt in Form eines Pedals, vorgesehen ist, welches dazu konfiguriert ist, einen Sollwert für die Geschwindigkeit des Mitnahmestaplers zu festzulegen.

12. System nach einem der Ansprüche 10 bis 11, wobei zusätzlich eine Vorrichtung vorgesehen ist, welche dazu konfiguriert ist, den momentanen Zustand des hydraulischen Systems (4) zu erfassen, und die Information über den Zustand des hydraulischen Systems (4) der Steuereinheit (2) bereitzustellen.

13. System nach einem der Ansprüche 10 bis 12, wobei zusätzlich ein hydraulisches System (8) zur Änderung eines Fahrmodus vorgesehen ist, wobei das hydraulische System zur Änderung der Fahrtrichtung (4) pro Fahrmodus zwischen zwei einander entgegengesetzten Fahrtrichtungen -bevorzugt Vorwärts und Rückwärts oder Links und Rechts- schalten kann, wobei der Mitnahmestapler besonders bevorzugt zwei Fahrmodi aufweist, wobei ein Fahrmodus die Fahrtrichtungen Vorwärts und Rückwärts und der andere Fahrtmodus die Fahrtrichtungen Links und Rechts aufweist.

14. System nach einem der vorangehenden Ansprüche 10 bis 13, wobei die Steuereinheit (2) zusätzlich dazu konfiguriert ist, eine Hebevorrichtung des Mitnahmestaplers zu steuern.

15. Mitnahmestapler, wobei der Mitnahmestapler ein System nach wenigstens einem der Ansprüche 10 bis 14 zur Umsetzung eines Verfahrens nach wenigstens einem der Ansprüche 1 bis 9 aufweist.
